# EUROPEAN PATENT APPLICATION

(11) **EP 3 110 123 A1**
(43) Date of publication of application: **28.12.2016**
(21) Application number: 16175710.9
(22) Date of filing: 22.06.2016
(51) Int. Cl.: H04N 1/32, H04N 1/00, H04N 1/387, G06F 17/22, G06F 17/24, G06T 7/00

(54) **DETECTION OF PROOF-CORRECTION INFORMATION IN MANUSCRIPT IMAGES**

(30) Priority: 22.06.2015 JP 2015124974
(71) Applicant: Ricoh Company, Ltd., Tokyo 143-8555 (JP)
(72) Inventor: KAMIMOTO, Hiroshi, Tokyo, 143-8555 (JP)
(74) Representative: Schwabe - Sandmair - Marx

(57) **Abstract**

A delivery system (1) including an image forming apparatus (100) and a delivery server apparatus (200) includes a reading control portion (130) configured to control scanning of a manuscript containing handwritten proof correction, a detection portion (220) configured to perform, for each page of image data representing one or more manuscript images obtained by scanning the manuscript, detection of a proof-correction indication image, the proof-correction indication image indicating that the page has proof-correction information, a generation portion (230) configured to generate output information where link information, the link information being for use in displaying a page where the proof-correction indication image is detected, is added to the image data, and a delivery control portion (240) configured to perform control of delivering the generated output information to an information processing apparatus (80, 300).

## Description

### BACKGROUND OF THE INVENTION

### 1. Field of the Invention

The present invention relates generally to delivery server apparatuses, delivery methods, and delivery systems.

### 2. Description of the Related Art

Delivery systems that deliver a variety of electronic data, such as a scan image, captured image, and print image, are conventionally known. A system configured to make annotations on an electronic document shared by a plurality of users on a network is disclosed in Patent Document 1 (Japanese Laid-open Patent Publication No. 2012-029127).

Process of detecting and correcting errors in a manuscript (hereinafter, sometimes referred to as "proofreading" or "proof correction") in the publishing industry is performed through the following procedure, for example. A publisher prints a digitized not-proofread manuscript and sends the thus-printed not-proofread manuscript (hereinafter, "proof") to an outsource service company providing a service of performing a proofreading process. The outsource service company makes handwritten proof correction on the proof and sends the proofread manuscript (i.e., the proof, to which handwritten proof-correction information is added) to the publisher. The publisher digitizes the proof, to which the proof-correction information is added, into an electronic form and stores it in a server or the like. Thereafter, the publisher corrects errors on the digitized not-proofread manuscript with reference to the digitized proof, to which the proof-correction information is added, thereby generating a proof-corrected manuscript.

The above-described proofreading process in the publishing industry is disadvantageous in that a part of the proof-correction information can be overlooked when correcting the digitized not-proofread manuscript with reference to the digitized the proof, to which the proof-correction information is added. With the system disclosed in Patent Document 1, the annotations cannot be extracted from a scan image or the like because the annotations are added by a user by operating a UI (User Interface). Accordingly, it is difficult to reduce oversights in a proofreading process using the above-described conventional technique.

Under the circumstances, there is a need for reducing oversights in a proofreading process.

### SUMMARY OF THE INVENTION

It is an object of the present invention to at least partially solve the problems in the conventional technology.

According to exemplary embodiments of the present invention, there is provided a delivery server apparatus comprising: a detection portion configured to perform, for each page of image data representing one or more manuscript images, detection of a proof-correction indication image, the proof-correction indication image indicating that the page has proof-correction information; and a generation portion configured to generate output information where link information, the link information being for use in displaying a page where the proof-correction indication image is detected, is added to the image data.

Exemplary embodiments of the present invention also provide a delivery method comprising: performing, for each page of image data representing one or more manuscript images, detection of a proof-correction indication image, the proof-correction indication image indicating that the page has proof-correction information; and generating output information where link information, the link information being for use in displaying a page where the proof-correction indication image is detected, is added to the image data.

Exemplary embodiments of the present invention also provide a delivery server apparatus comprising: a detection portion configured to detect a difference between first image data, the first image data being data representing one or more manuscript images, and second image data, the second image data being data representing the manuscript images and containing proof-correction information; and a generation portion configured to generate output information where link information, the link information being for use in displaying a page where the difference is detected, is added to the second image data.
Exemplary embodiments of the present invention also provide a delivery method comprising: detecting a difference between first image data, the first image data being data representing one or more manuscript images, and second image data, the second image data being data representing the manuscript images and containing proof-correction information; and generating output information where link information, the link information being for use in displaying a page where the difference is detected, is added to the second image data.

Exemplary embodiments of the present invention also provide A delivery system including an image forming apparatus and a delivery server apparatus, the delivery system comprising: a reading control portion configured to control scanning of a manuscript containing handwritten proof correction; a detection portion configured to perform, for each page of image data representing one or more manuscript images obtained by scanning the manuscript, detection of a proof-correction indication image, the proof-correction indication image indicating that the page has proof-correction information; a generation portion configured to generate output information where link information, the link information being for use in displaying a page where the proof-correction indication image is detected, is added to the image data; and a delivery control portion configured to perform control of delivering the generated output information to an information processing apparatus.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating an example system configuration of a delivery system according to a first embodiment;
FIG. 2 is a diagram illustrating an example layout of a manuscript according to the first embodiment;
FIG. 3 is a diagram illustrating example information of an electronic file generated by a delivery server apparatus according to the first embodiment;
FIG. 4 is a block diagram illustrating an example hardware structure of an image forming apparatus according to the first embodiment;
FIG. 5 is a block diagram illustrating an example hardware structure of the delivery server apparatus according to the first embodiment;
FIG. 6 is a block diagram illustrating example functional elements of the image forming apparatus and the delivery server apparatus according to the first embodiment;
FIG. 7 is a sequence diagram illustrating an example of a delivery process sequence according to the first embodiment;
FIG. 8 is a block diagram illustrating example functional elements of an image forming apparatus and a delivery server apparatus according to a second embodiment;
FIG. 9 is a diagram illustrating example information of an electronic file generated by the delivery server apparatus according to the second embodiment;
FIG. 10 is a sequence diagram illustrating an example of a delivery process sequence according to the second embodiment;
FIG. 11 is a block diagram illustrating example functional elements of the image forming apparatus and a delivery server apparatus according to a third embodiment; and
FIG. 12 is a sequence diagram illustrating an example of a delivery process sequence according to the third embodiment.

The accompanying drawings are intended to depict exemplary embodiments of the present invention and should not be interpreted to limit the scope thereof. Identical or similar reference numerals designate identical or similar components throughout the various drawings.

### DETAILED DESCRIPTION OF THE PREFERRED EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

Exemplary embodiments according to the present invention are described below with reference to the accompanying drawings. The embodiments described below should not be construed as limiting the scope of the present invention. The embodiments can be combined as appropriate so long as no contradiction occurs.

### First Embodiment

System Configuration

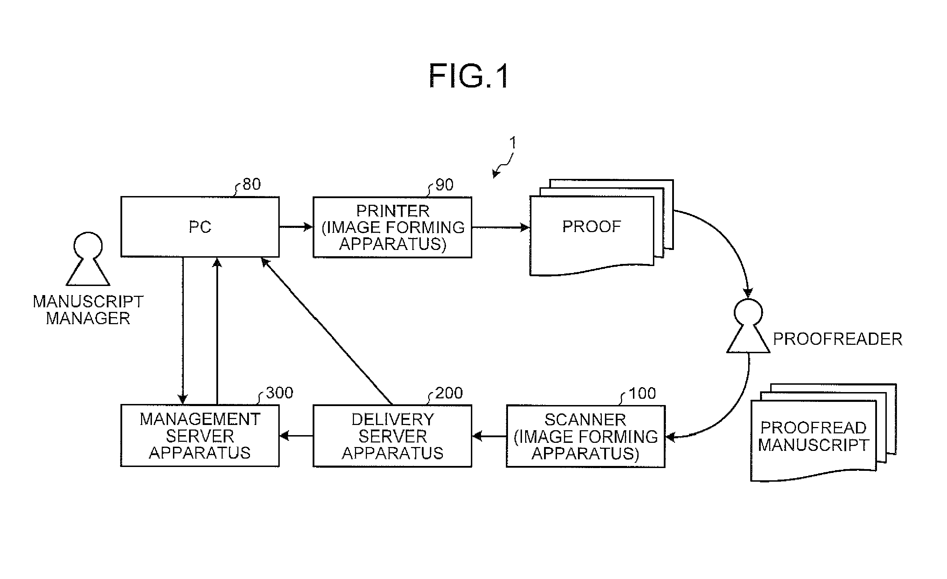

A system configuration of a delivery system according to a first embodiment is described below with reference to FIG. 1. FIG. 1 is a diagram illustrating an example system configuration of the delivery system according to the first embodiment.

As illustrated in FIG. 1, a delivery system 1 includes a PC (Personal Computer) 80, a printer 90, a scanner 100, a delivery server apparatus 200, and a management server apparatus 300. Each of the printer 90 and the scanner 100 of the delivery system 1 may be an image forming apparatus, such as an MFP (Multi-Function Peripheral), capable of providing a copier function, a scanner function, a facsimile function, and a printer function. The printer 90 and the scanner 100 may be embodied in a single apparatus (MFP). Hereinafter, the scanner 100 may be referred to as the image forming apparatus 100 for convenience of description. The delivery system 1 according to the first embodiment can be used in a proofreading process of the publishing industry.

The PC 80 is operated by a manuscript manager, who is a user on publisher's side. The manuscript manager operates the PC 80, thereby causing the printer 90 to print image data, which is data representing one or more manuscript images. The image data may be stored in the PC 80 or, alternatively, may be stored in the management server apparatus 300 managing various electronic files. When the image data is stored in the management server apparatus 300, the PC 80 acquires the image data from the management server apparatus 300 responsive to an operation performed by the manuscript manager. The not-proofread manuscript (paper media) (hereinafter, "proof") printed out by the printer 90 contains a checkbox(es) that allows the delivery server apparatus 200 to detect a page(s) where proof correction is made.

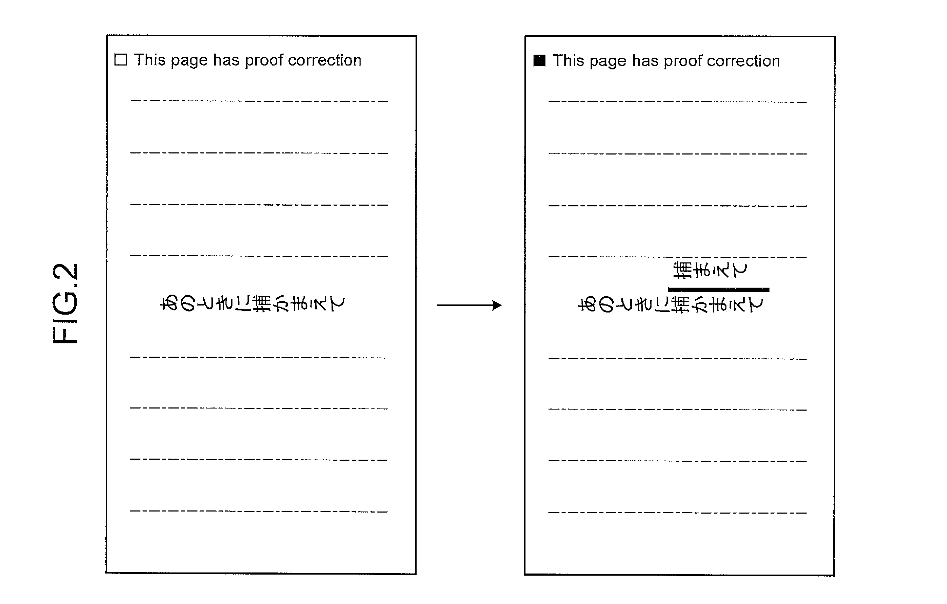

FIG. 2 is a diagram illustrating an example layout of a manuscript according to the first embodiment. For instance, as illustrated in the upper panel of FIG. 2, each page of the proof printed out by the printer 90 contains a checkbox to be marked by a proofreader when the proofreader makes proof correction. The element to be used is not limited to such a checkbox; any mark, symbol, numeric, character, or the like, or a combination of them may alternatively be used so long as it can indicate that proof correction is made on the page. The proof with the checkbox may be produced by causing the printer 90 to perform printing using paper, on which the checkbox is preprinted, and a dedicated tray. Alternatively, the proof with the checkbox may be produced by generating image data containing the checkbox and causing the printer 90 to print out the generated image data. The manuscript manager sends the proof (paper media) printed out by the printer 90 to an outsource service company providing a service of performing a proofreading process.

A proofreader, who is a user on the outsource service company's side, receives the proof and makes handwritten proof correction on the proof. For instance, as illustrated in the lower panel of FIG. 2, the proofreader marks a portion where a possible error is detected with a line or the like, handwrites a correction candidate or the like, and marks the checkbox to indicate that proof correction is made on this page. The proofreader sends the proofread manuscript (paper media) to the publisher.

The manuscript manager receives the proofread manuscript (paper media) and performs scanning of the proofread manuscript using the scanner 100. The scanner 100 scans the proofread manuscript and transmits image data containing a proof-correction indication image(s) (i.e., the marked checkbox(es)), which indicates that the page where the proof-correction indication image resides has proof-correction information, to the delivery server apparatus 200. Upon receiving the image data from the scanner 100, the delivery server apparatus 200 performs, for each page of the image data, detection of the proof-correction indication image (the marked checkbox). The delivery server apparatus 200 generates output information (e.g., an electronic file) where link information for displaying the page(s) where the proof-correction indication image (the marked checkbox) is detected is added to the image data. When generating the electronic file, the checkbox (and a caption, such as "This page has proof correction") may be deleted.

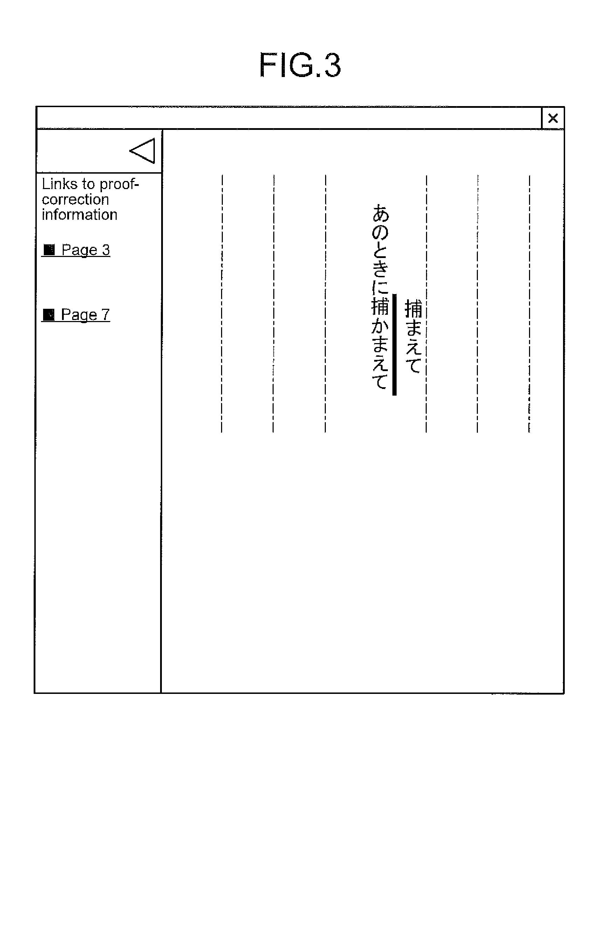

FIG. 3 is a diagram illustrating example information of the electronic file generated by the delivery server apparatus 200 according to the first embodiment. As illustrated in FIG. 3, link information (e.g., "Page 3" and "Page 7") for displaying the page(s) containing the proof-correction information is added in the electronic file generated by the delivery server apparatus 200 so that, when the link information is selected, the page containing the proof-correction information is displayed. FIG. 3 illustrates an example of the electronic file, from which the checkbox and the like are deleted. The delivery server apparatus 200 transmits (delivers) the electronic file, in which the link information is added, to the management server apparatus 300. The delivery server apparatus 200 may transmit the electronic file, in which the link information is added, to the PC 80.

The management server apparatus 300 manages the electronic file delivered by the delivery server apparatus 200. The PC 80 or the like acquires the electronic file managed by the management server apparatus 300 as necessary. The manuscript corrects errors in the digitized proof using the electronic file, in which the link information is added, by operating the PC 80 or the like.

In short, the delivery system 1 performs, for each page of image data obtained by scanning a manuscript where handwritten proof correction is made, detection of a proof-correction indication image, which indicates that the page contains proof-correction information, and generates an electronic file where link information for displaying the page(s) where the proof-correction indication image is detected is added to the image data. Hence, the delivery system 1 allows a manuscript manager to correct errors with reference to the electronic file, in which the link information is added, thereby reducing oversights in a proofreading process.

### Hardware Structures of Apparatuses

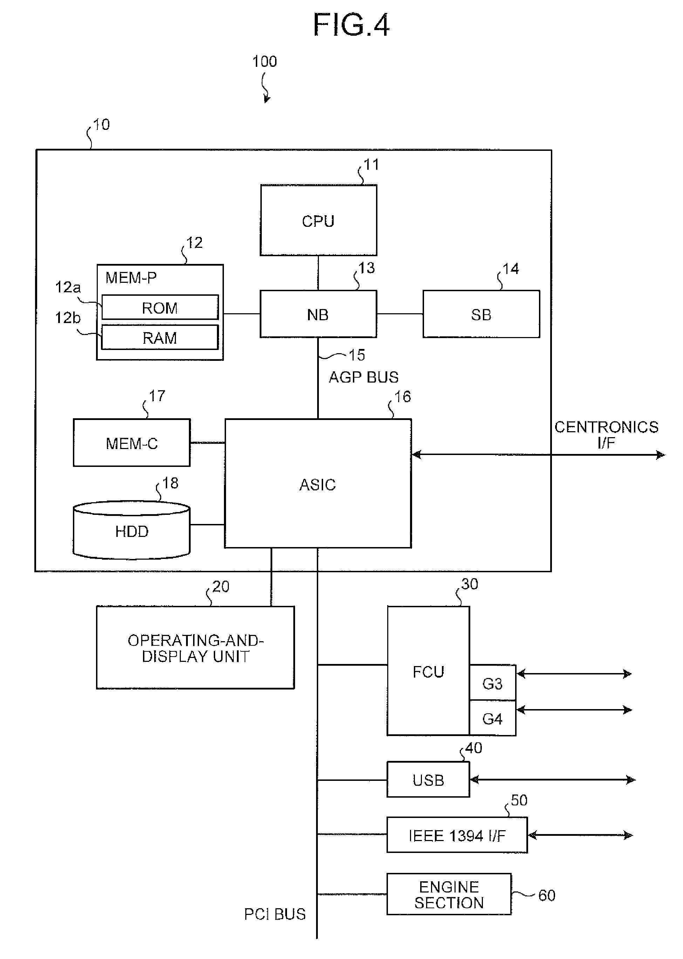

A hardware structure of the image forming apparatus 100 according to the first embodiment is described below with reference to FIG. 4. FIG. 4 is a block diagram illustrating an example hardware structure of the image forming apparatus 100 according to the first embodiment.

As illustrated in FIG. 4, the image forming apparatus 100 includes a controller 10 and an engine section 60 that are connected via a PCI (Peripheral Component Interconnect) bus. The controller 10 is a controller that controls the entire image forming apparatus 100, drawing, communication, and various inputs. The engine section 60 is a printer engine or the like connectable to the PCI bus. Examples of the engine section 60 include a black-and-white plotter, a one-drum color plotter, a four-drum color plotter, a scanner unit, and a facsimile unit. The engine section 60 includes, in addition to what is referred to as an engine portion such as a plotter, a portion for image processing, such as error diffusion and gamma conversion.

The controller 10 includes a CPU (Central Processing Unit) 11, a north bridge (NB) 13, a system memory (MEM-P) 12, a south bridge (SB) 14, a local memory (MEM-C) 17, an ASIC (Application-Specific Integrated Circuit) 16, and a Hard Disk Drive (HDD) 18, where the north bridge 13 and the ASIC 16 are connected to each other via an AGP (Accelerated Graphics Port) bus 15. The MEM-P 12 includes a ROM (Read Only Memory) 12a and a RAM (Random Access Memory) 12b.

The CPU 11 performs overall control of the image forming apparatus 100 and includes a chip set including the north bridge 13, the MEM-P 12, and the south bridge 14. The CPU 11 is connected to other devices via the chip set. The north bridge 13 is a bridge for connecting the CPU 11 to the MEM-P 12, the south bridge 14, and the AGP bus 15. The north bridge 13 includes a PCI master, an AGP target, and a memory controller that controls reading and writing from and to the MEM-P 12.

The MEM-P 12 is a system memory for use as a memory where program instructions (hereinafter, "program") and data are to be stored, as a memory where program and data are to be loaded, and as a printer buffer memory and includes the ROM 12a and the RAM 12b. The ROM 12a is a read only memory for use as the memory where program and data are to be stored. The RAM 12b is a writable and readable memory for use as the memory where program and data are to be loaded and as the printer buffer memory. The south bridge 14 is a bridge for connecting between the north bridge 13, and PCI devices and peripheral devices. The south bridge 14 is connected to the north bridge 13 via the PCI bus. A network interface and the like are also connected to this PCI bus.

The ASIC 16 is an IC (Integrated Circuit) for image processing and includes a hardware component for the image processing. The ASIC 16 functions as a bridge that connects between each of the AGP bus 15, the PCI bus, the HDD 18, and the MEM-C 17. The ASIC 16 includes a PCI target and an AGP master, an arbiter (ARB), which is a core of the ASIC 16, a memory controller that controls the MEM-C 17, a plurality of DMACs (Direct Memory Access Controllers) that perform image rotation and the like by a hardware logic and the like, and a PCI unit that transfers data to and from the engine section 60 via the PCI bus. An FCU (Facsimile Control Unit) 30, a USB (Universal Serial Bus) 40, and an IEEE 1394 (the Institute of Electrical and Electronics Engineers 1394) interface 50 are connected to the ASIC 16 via the PCI bus. An operating-and-display unit 20 is directly connected to the ASIC 16.

The MEM-C 17 is a local memory for use as an image buffer for copying and a code buffer. The HDD (Hard Disk Drive) 18 is a storage for accumulating image data, programs, font data, and forms. The AGP bus 15 is a bus interface for a graphics accelerator card introduced for speedup of graphics processing and allows direct access to the MEM-P 12 with a high throughput, thereby increasing processing speed of the graphics accelerator card.

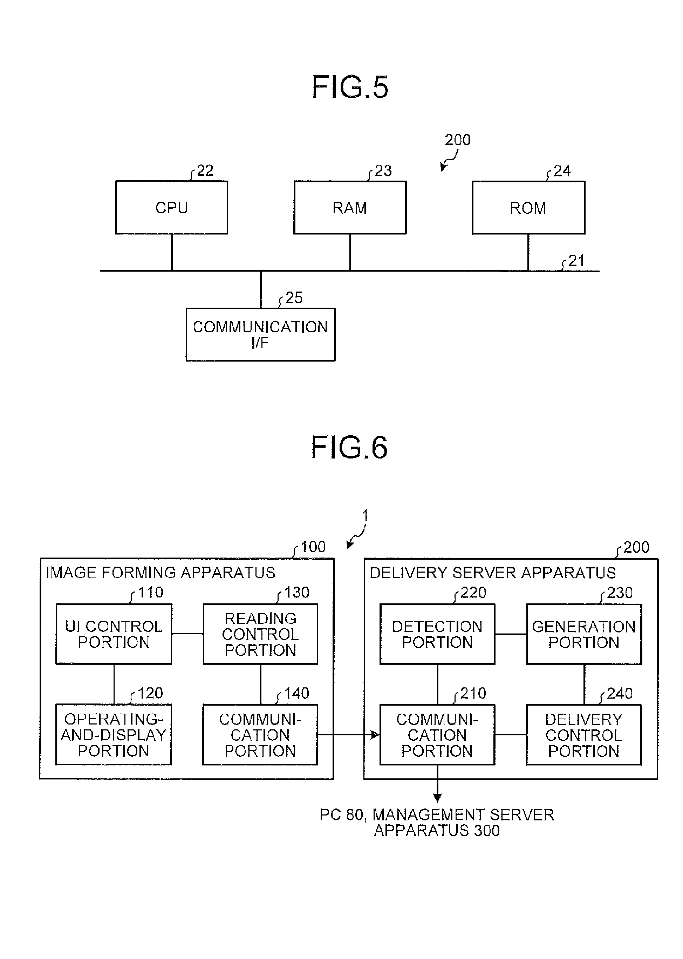

A hardware structure of the delivery server apparatus 200 according to the first embodiment is described below with reference to FIG. 5. FIG. 5 is a block diagram illustrating an example hardware structure of the delivery server apparatus 200 according to the first embodiment.

As illustrated in FIG. 5, the delivery server apparatus 200 includes a CPU 22, a RAM 23, a ROM 24, and a communication I/F 25. These components are mutually connected via a system bus 21.

The CPU 22 performs centralized control on operations of the delivery server apparatus 200. The CPU 22 performs the centralized control on the operations of the delivery server apparatus 200 by executing, while using the RAM 23 as a work area, program stored in the ROM 24 or the like. The communication I/F 25 is an interface that controls communications with the PC 80, the image forming apparatus 100, the management server apparatus 300, and the like.

### Functional Elements of Apparatuses

Functional elements of the apparatuses according to the first embodiment are described below with reference to FIG. 6. FIG. 6 is a block diagram illustrating example functional elements of the image forming apparatus 100 and the delivery server apparatus 200 according to the first embodiment.

As illustrated in FIG. 6, the image forming apparatus 100 includes a UI (User Interface) control portion 110, an operating-and-display portion 120, a reading control portion 130, and a communication portion 140. A part or all of the UI control portion 110 and the reading control portion 130 may be implemented in software (program) or in a hardware circuit.

The UI control portion 110 controls input processing and display processing of the operating-and-display portion 120. For instance, responsive to user's operation on the operating-and-display portion 120, the UI control portion 110 accepts a request for scanning a manuscript where handwritten proof correction is made by a proofreader, a request for transmitting image data generated by the scan, and the like. The UI control portion 110 also performs control for displaying, on the operating-and-display portion 120, a result of processing performed responsive to user's operation. The operating-and-display portion 120 displays a variety of information under control of the UI control portion 110. The operating-and-display portion 120 may include a Liquid Crystal Display (LCD) having a touch panel function or the like. For instance, the operating-and-display portion 120 displays a variety of information, such as a menu for image processing and a result of processing, under control of the UI control portion 110.

The reading control portion 130 controls scanning of a manuscript and the like. For instance, when a request for scanning a manuscript is accepted by the UI control portion 110, the reading control portion 130 controls scanning of the manuscript. In the first embodiment, the scan-requested manuscript is a manuscript where handwritten proof correction is made by a proofreader. Thereafter, the reading control portion 130 performs control of transmitting image data obtained by the scan to the delivery server apparatus 200 via the communication portion 140. The image data generated by scanning the manuscript, which represent one or more manuscript images and on which handwritten proof correction is made by the proofreader, is thus transmitted to the delivery server apparatus 200.

The communication portion 140 transmits and receives a variety of information. For instance, the communication portion 140 transmits image data to the delivery server apparatus 200 under control of the reading control portion 130.

As illustrated in FIG. 6, the delivery server apparatus 200 includes a communication portion 210, a detection portion 220, a generation portion 230, and a delivery control portion 240. A part or all of the detection portion 220, the generation portion 230, and the delivery control portion 240 may be implemented in software (program) or in a hardware circuit.

The communication portion 210 transmits and receives a variety of information. For instance, the communication portion 210 transmits image data transmitted from the image forming apparatus 100. For another instance, the communication portion 210 transmits an electronic file to the PC 80 or the management server apparatus 300 under control of the delivery control portion 240.

The detection portion 220 performs, for each page of image data representing one or more manuscript images, detection of a proof-correction indication image, which indicates that the page has proof-correction information. For instance, the detection portion 220 performs, for each page of image data received by the communication portion 210, detection of a marked checkbox (see FIG. 2), which indicates that the page has proof-correction information. Thereafter, the detection portion 220 outputs the image data together with a page number(s) of the page(s) where the marked checkbox is detected to the generation portion 230.

The generation portion 230 generates output information, in which link information is added to the image data. For instance, the generation portion 230 generates an electronic file (see FIG. 3), in which link information for displaying the page(s) where the marked checkbox is detected is added to the image data on the basis of the page number(s) output from the detection portion 220. The generation portion 230 outputs the generated electronic file to the delivery control portion 240.

The delivery control portion 240 performs control of delivering the output information. For instance, the delivery control portion 240 performs control of transmitting the electronic file generated by the generation portion 230 to the PC 80, the management server apparatus 300, or the like via the communication portion 210. The manuscript manager corrects errors in the not-proofread manuscript with reference to the electronic file, in which the link information is added.

### Delivery Process Sequence

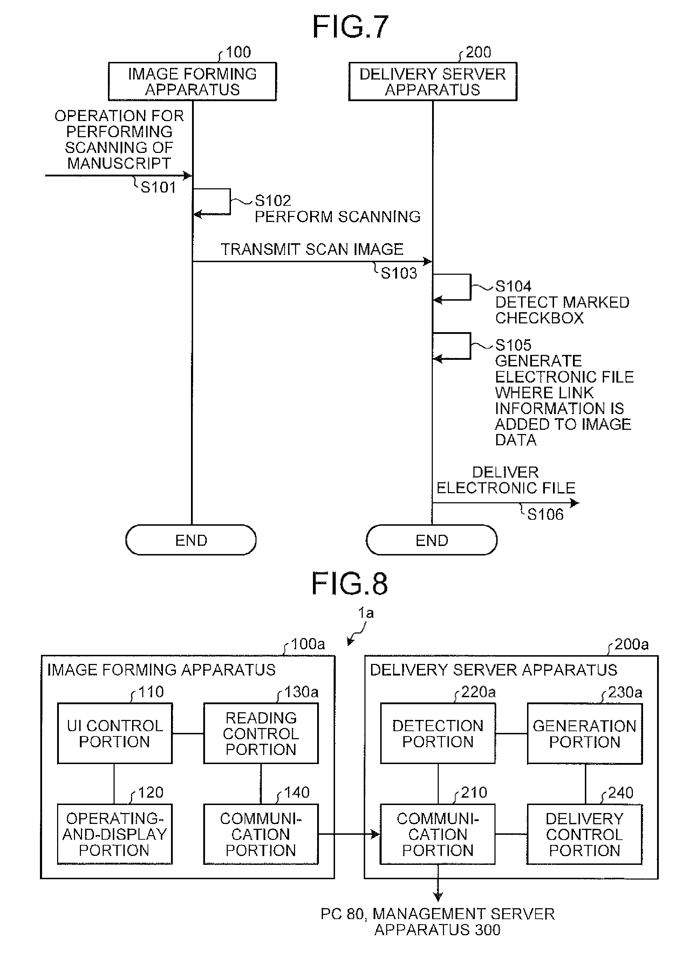

A delivery process sequence according to the first embodiment is described below with reference to FIG. 7. FIG. 7 is a sequence diagram illustrating an example of the delivery process sequence according to the first embodiment.

As illustrated in FIG. 7, the image forming apparatus 100 accepts an operation for performing scanning of a manuscript where handwritten proof correction is made by a proofreader (step S101) and performs scanning of the manuscript (step S102). The image forming apparatus 100 transmits a scan image obtained by the scan to the delivery server apparatus 200 (step S103). The scan image is image data containing proof-correction information, a checkbox indicating whether or not proof-correction information is contained, and the like.

Upon receiving the image data from the image forming apparatus 100, the delivery server apparatus 200 performs, for each page of the image data, detection of a marked checkbox, which indicates that the page has proof-correction information (step S104). The delivery server apparatus 200 generates an electronic file, in which link information for displaying the page(s) where the marked checkbox is detected is added to the image data (step S105). Thereafter, the delivery server apparatus 200 delivers the generated electronic file to the PC 80, the management server apparatus 300, or the like (step S106).

### Advantageous Effect

The delivery system 1 according to the first embodiment performs, for each page of image data obtained by scanning a manuscript where handwritten proof correction is made, detection of a proof-correction indication image, which indicates that the page has proof-correction information, and generates an electronic file, in which link information for displaying the page(s) where the proof-correction indication image is detected is added to the image data. Accordingly, the delivery system 1 can reduce oversights in a proofreading process.

### Second Embodiment

In the first embodiment described above, for each page of image data, whether the page contains proof-correction information is detected by scanning a manuscript containing a checkbox(es) that is to be marked by a proofreader when the proofreader makes handwritten proof correction. The detection as to whether proof-correction information is contained may alternatively be performed by detecting a difference between image data obtained by scanning a manuscript where handwritten proof correction is made by a proofreader and image data obtained by scanning a not-proofread manuscript. In a second embodiment, detecting a difference between image data obtained by scanning a proofread manuscript and image data obtained by scanning a not-proofread manuscript and generating an electronic file where link information for displaying the page(s) where the difference is detected is added to the image data are described.

### Functional Elements of Apparatuses

Functional elements of apparatuses according to the second embodiment are described below with reference to FIG. 8. FIG. 8 is a block diagram illustrating example functional elements of an image forming apparatus 100a and a delivery server apparatus 200a according to the second embodiment. In the second embodiment, functional elements similar to those of the apparatuses according to the first embodiment are denoted by like reference numerals and detailed description thereof may be omitted. Specifically, functions of the portions other than a reading control portion 130a, a detection portion 220a, and a generation portion 230a, which are described below, are similar to those of the first embodiment.

As illustrated in FIG. 8, the image forming apparatus 100a includes the UI control portion 110, the operating-and-display portion 120, the reading control portion 130a, and the communication portion 140. A part or all of the UI control portion 110 and the reading control portion 130a may be implemented in software (program) or in a hardware circuit.

The reading control portion 130a controls scanning of a manuscript and the like. In the second embodiment, scan-requested manuscripts are a manuscript where handwritten proof correction is made by a proofreader and a not-proofread manuscript is requested. It is assumed that none of these manuscripts contains a checkbox or the like that is to be marked when proof correction is made. Hereinafter, the not-proofread manuscript is sometimes referred to as "the first manuscript", whereas the manuscript where handwritten proof correction is made by a proofreader is sometimes referred to as "the second manuscript". Manuscript image data generated by scanning the first manuscript is sometimes referred to as "first image data", whereas manuscript image data generated by scanning the second manuscript is sometimes referred to as "second image data". When a request for scanning the first manuscript and the second manuscript is accepted by the UI control portion 110, the reading control portion 130a controls scanning of the first manuscript and the second manuscript. The reading control portion 130a performs control of transmitting the first image data (data representing one or more manuscript images) and the second image data (data representing the manuscript images and containing proof-correction information) obtained by the scan to the delivery server apparatus 200a via the communication portion 140.

As illustrated in FIG. 8, the delivery server apparatus 200a includes the communication portion 210, the detection portion 220a, the generation portion 230a, and the delivery control portion 240. A part or all of the detection portion 220a, the generation portion 230a, and the delivery control portion 240 may be implemented in software (program) or in a hardware circuit.

The detection portion 220a detects a difference between the first image data and the second image data. For instance, the detection portion 220a detects a difference between the first image data and the second image data received by the communication portion 210 using a "diff" program or the like. The detection portion 220a outputs the second image data together with a page number(s) of a page(s) where the difference is detected to the generation portion 230a.

The generation portion 230a generates output information, in which link information is added to the second image data. For instance, the generation portion 230a generates an electronic file, in which link information for displaying the page(s) where the difference is detected is added to the second image data on the basis of the page number(s) output from the detection portion 220a. Example information of the electronic file generated by the generation portion 230a is similar to that illustrated in FIG. 3.

The output information generated by the generation portion 230a may be configured to explicitly indicate a region(s) containing the difference detected by the detection portion 220a. The region may be one of regions, into which a single page is divided as desired. However, it is preferable that the region is changed depending on a type of the manuscript (e.g., vertical writing or horizontal writing) and/or an amount of information per page. Specifically, the detection portion 220a outputs, in addition to the second image data and the page number(s), location information concerning the detected difference (i.e., information about location of the difference in the page) to the generation portion 230a. The generation portion 230a stores location information concerning the divided regions in advance. When location information concerning the difference detected by the detection portion 220a is included in the stored location information concerning the regions, the generation portion 230a generates an electronic file explicitly indicating the region containing the difference.

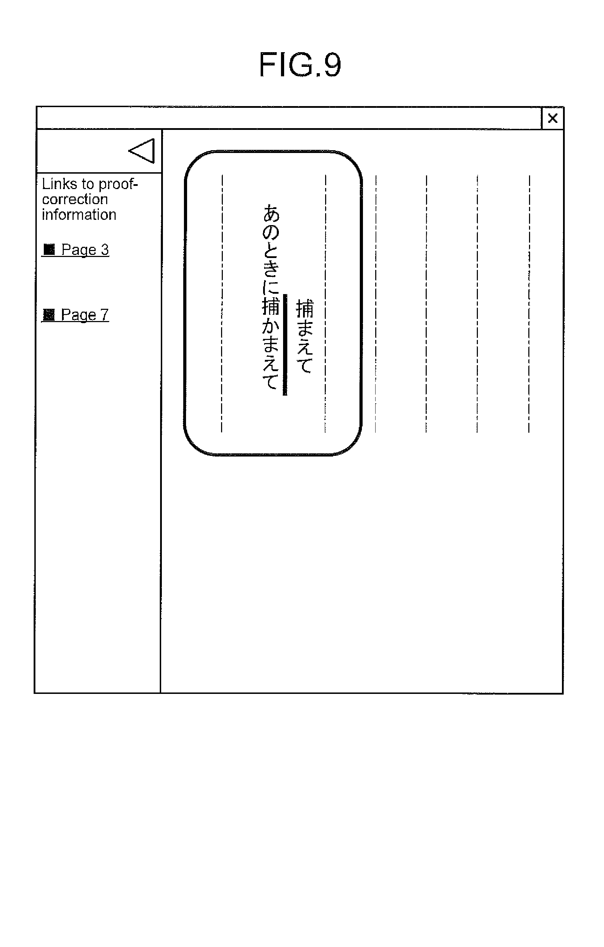

FIG. 9 is a diagram illustrating example information of the electronic file generated by the delivery server apparatus 200a according to the second embodiment. As illustrated in FIG. 9, link information (e.g., "Page 3" and "Page 7") for displaying the page(s) containing the proof-correction information is added in the electronic file generated by the delivery server apparatus 200a so that, when the link information is selected, the page containing the proof-correction information is displayed. A region (frame) containing the proof-correction information is explicitly indicated.

### Delivery Process Sequence

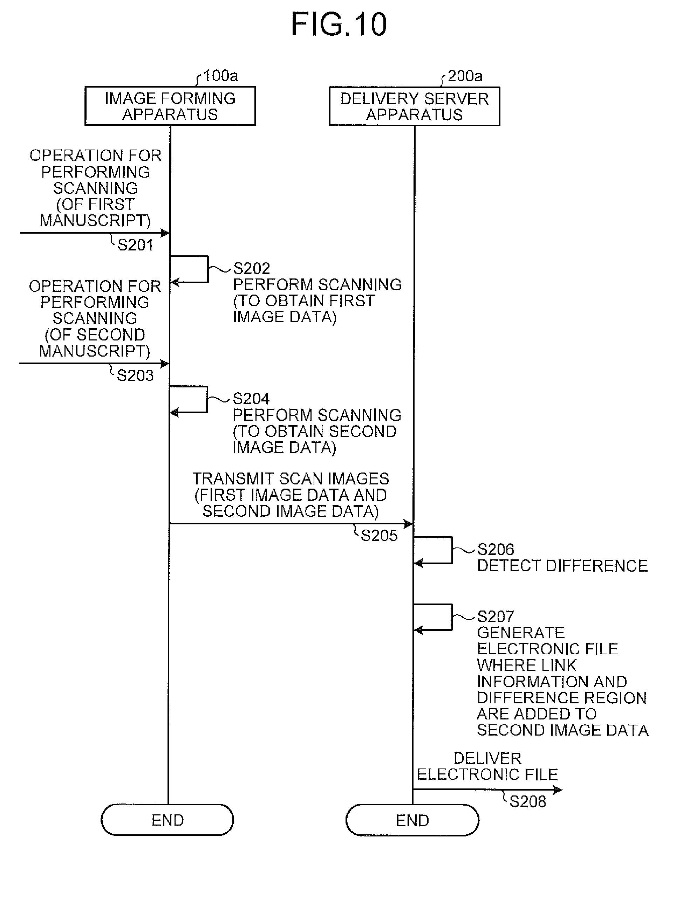

A delivery process sequence according to the second embodiment is described below with reference to FIG. 10. FIG. 10 is a sequence diagram illustrating an example of the delivery process sequence according to the second embodiment.

As illustrated in FIG. 10, the image forming apparatus 100a accepts an operation for performing scanning of the first manuscript, which is a not-proofread manuscript, (step S201) and performs scanning of the first manuscript (step S202). The image forming apparatus 100a thus generates the first image data. The image forming apparatus 100a accepts an operation for performing scanning of the second manuscript, which is a manuscript where handwritten proof correction is made by a proofreader, (step S203) and performs scanning of the second manuscript (step S204). The image forming apparatus 100a thus generates the second image data. The image forming apparatus 100a transmits scan images (the first image data and the second image data) obtained by the scan to the delivery server apparatus 200a (step S205).

Upon receiving the first image data and the second image data from the image forming apparatus 100a, the delivery server apparatus 200a detects a difference between the first image data and the second image data (step S206). The delivery server apparatus 200a generates an electronic file, in which link information for displaying the page(s) where the difference is detected and a region(s) (difference region(s)) containing a position where the difference is detected are added to the second image data (step S207). Thereafter, the delivery server apparatus 200a delivers the generated electronic file to the PC 80, the management server apparatus 300, or the like (step S208).

### Advantageous Effects

A delivery system 1a according to the second embodiment detects a difference between the first image data, which is data representing one or more manuscript images, and the second image data, which is data representing the manuscript images and containing proof-correction information, and generates an electronic file where link information for displaying a page(s) where the difference is detected are added to the second image data. Accordingly, the delivery system 1a can reduce oversights in a proofreading process. Furthermore, because the electronic file generated by the delivery system 1a explicitly indicates a region(s) containing the detected difference, the delivery system 1a can further reduce oversights in the proofreading process. For instance, explicitly indicating regions each containing a difference is advantageous in a situation where a single page has a plurality of proof-correction information pieces.

### Third Embodiment

In the second embodiment described above, a difference between the first image data obtained by scanning a not-proofread manuscript and the second image data obtained by scanning a proofread manuscript is detected. Alternatively, the first image data to be used may be generated in advance. In a third embodiment, acquiring the first image data using storage location information indicating location where the first image data generated in advance is stored and detecting a difference between the acquired first image data and the second image data are described.

### Functional Elements of Apparatuses

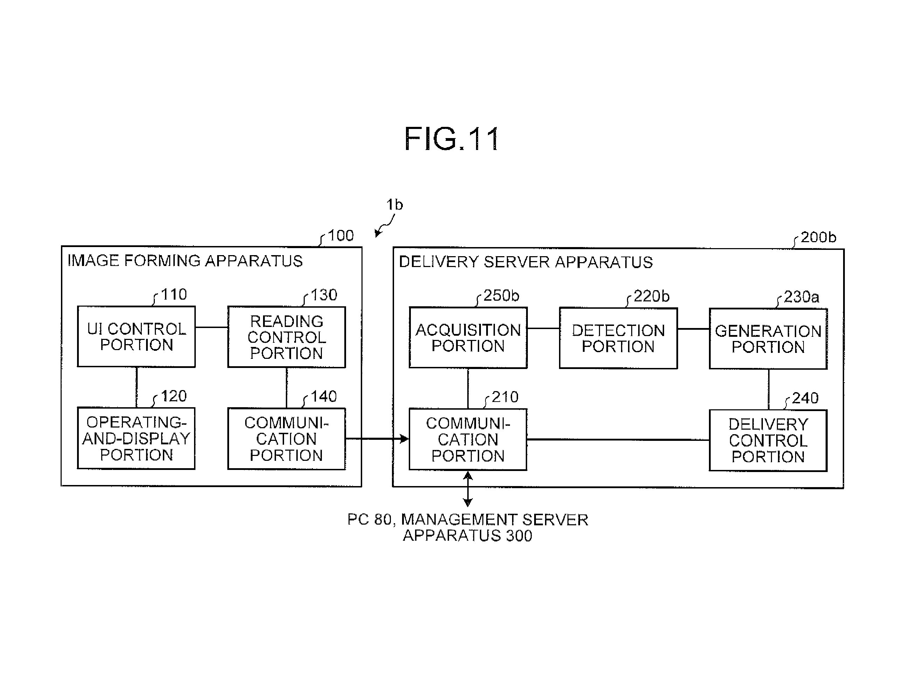

Functional elements of apparatuses according to the third embodiment are described below with reference to FIG. 11. FIG. 11 is a block diagram illustrating example functional elements of the image forming apparatus 100 and a delivery server apparatus 200b according to the third embodiment. In the third embodiment, functional elements similar to those of the apparatuses according to the first and second embodiments are denoted by like reference numerals and detailed description thereof may be omitted. Specifically, functions of the portions other than a detection portion 220b and an acquisition portion 250b, which are described below, are similar to those of the first and second embodiments.

As illustrated in FIG. 11, the image forming apparatus 100 includes the UI control portion 110, the operating-and-display portion 120, the reading control portion 130, and the communication portion 140. A part or all of the UI control portion 110 and the reading control portion 130 may be implemented in software (program) or in a hardware circuit.

As illustrated in FIG. 11, the delivery server apparatus 200b includes the communication portion 210, the detection portion 220b, the generation portion 230a, the delivery control portion 240, and the acquisition portion 250b. A part or all of the detection portion 220b, the generation portion 230a, the delivery control portion 240, and the acquisition portion 250b may be implemented in software (program) or in a hardware circuit.

The acquisition portion 250b acquires the first image data using storage location information indicating location where the first image data is stored. Description below is made on an assumption that the first image data is stored in the management server apparatus 300. For instance, when the second image data is received by the communication portion 210, the acquisition portion 250b acquires, via the communication portion 210, the first image data from the management server apparatus 300 using a URL (Uniform Resource Locator) indicating location where the first image data is stored in the management server apparatus 300. The URL information may be contained at a desired position in the second image data or, alternatively, may be provided by a user by entering the URL. When the URL information is to be contained at the desired position in the second image data, the manuscript manager can use the PC 80 or the like to add the URL to the second image data. The acquisition portion 250b outputs the acquired first image data and the received second image data to the detection portion 220b.

The detection portion 220b detects a difference between the first image data and the second image data. For instance, the detection portion 220b detects the difference between the first image data and the second image data output from the acquisition portion 250b using a "diff" program or the like. The detection portion 220b outputs the second image data together with a page number(s) of a page(s) where the difference is detected to the generation portion 230a. The generation portion 230a generates an electronic file (see FIG. 3), in which link information for displaying the page(s) where the difference is detected is added to the second image data on the basis of the page number(s) output from the detection portion 220b. The electric file (see FIG. 9) generated by the generation portion 230a may explicitly indicate a region(s) containing the difference detected by the detection portion 220b as in the case of the second embodiment.

### Delivery Process Sequence

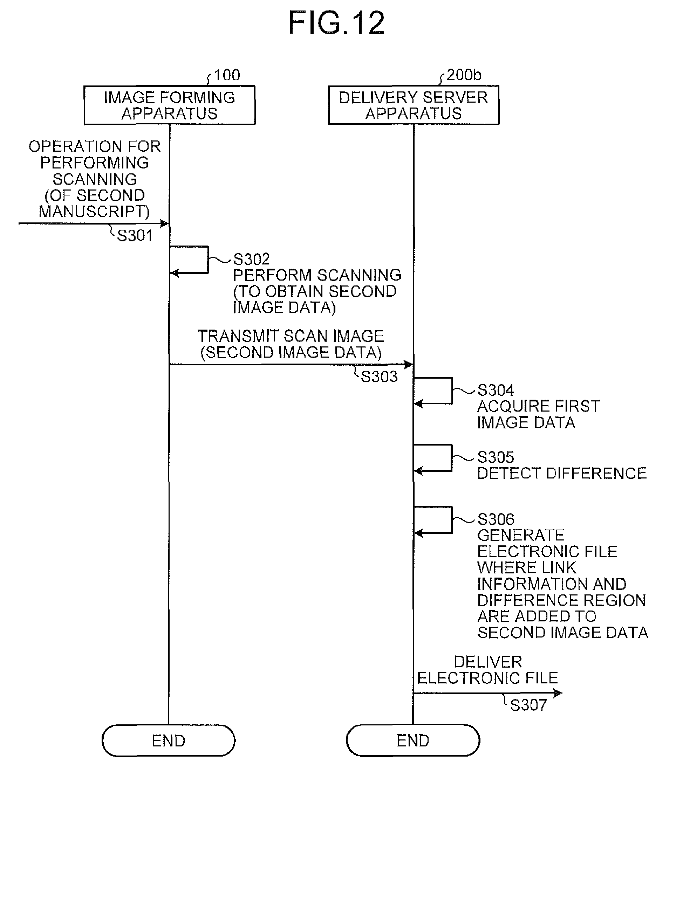

A delivery process sequence according to the third embodiment is described below with reference to FIG. 12. FIG. 12 is a sequence diagram illustrating an example of the delivery process sequence according to the third embodiment.

As illustrated in FIG. 12, the image forming apparatus 100 accepts an operation for performing scanning of the second manuscript, which is a manuscript where handwritten proof correction is made by a proofreader, (step S301) and performs scanning of the second manuscript (step S302). The image forming apparatus 100 thus generates the second image data. The image forming apparatus 100 transmits a scan image (the second image data) obtained by the scan to the delivery server apparatus 200b (step S303).

Upon receiving the second image data from the image forming apparatus 100, the delivery server apparatus 200b acquires the first image data from the management server apparatus 300 or the like using the URL (step S304). The delivery server apparatus 200b detects a difference between the acquired first image data and the received second image data (step S305). Thereafter, the delivery server apparatus 200b generates an electronic file, in which link information for displaying the page(s) where the difference is detected and a region(s) (difference region(s)) containing a position where the difference is detected are added to the second image data (step S306). Thereafter, the delivery server apparatus 200b delivers the generated electronic file to the PC 80, the management server apparatus 300, or the like (step S307).

### Advantageous Effect

A delivery system 1b according to the third embodiment acquires the first image data using a URL indicating location where the first image data is stored, detects a difference between the first image data and the second image data, and generates an electronic file, in which link information for displaying a page(s) where the difference is detected are added to the second image data. Accordingly, the delivery system 1b can reduce oversights in a proofreading process.

### Fourth Embodiment

Embodiments of delivery system according to aspects of the present invention have been described above. The delivery system may be implemented in various ways other than the above-described embodiments. Embodiments that differ from the above-described embodiments in (1) Configuration and (2) Program are described below.

### (1) Configuration

The processing procedure, control procedure, specific names, and information including a variety of data and parameters presented above or in the drawings can be modified as desired unless otherwise specifically specified. The constituents of the illustrated apparatuses are functional concepts and do not necessarily require that they be physically configured as illustrated. Specific forms of distribution and integration of the apparatuses are not limited to those illustrated, and all or a part of the apparatuses can be functionally or physically distributed or integrated in any desired units depending on various loads, usage scenarios, and the like.

### (2) Program

Each of programs to be executed by the image forming apparatus 100 and the delivery server apparatus 200 may be provided in a form of being recorded in a computer-readable recording medium, such as a CD-ROM, a flexible disk (FD), a CD-R, and a DVD (Digital Versatile Disk) as an installable file or executable file. Each of the programs to be executed by the image forming apparatus 100 and the delivery server apparatus 200 may be configured to be stored in a computer connected to a network, such as the Internet, and provided by being downloaded over the network. Each of the programs to be executed by the image forming apparatus 100 and the delivery server apparatus 200 can be configured to be provided or delivered via a network, such as the Internet. Each of the programs to be executed by the image forming apparatus 100 and the delivery server apparatus 200 may be configured to be provided as being embedded in a ROM or the like in advance.

The program to be executed by the image forming apparatus 100 has a modular configuration including the reading control portion 130 described above. From an actual hardware perspective, the CPU reads out the program from a recording medium and executes it to load the reading control portion 130 into a main memory, thereby generating the reading control portion 130 on the main memory.

The program to be executed by the delivery server apparatus 200 has a modular configuration including the above-described portions (the detection portion 220, the generation portion 230, and the delivery control portion 240). From an actual hardware perspective, the CPU reads out the program from a recording medium and executes it to load the above-described portions into a main memory, thereby generating the detection portion 220, the generation portion 230, and the delivery control portion 240 on the main memory.

According to an aspect of the present invention, oversights in a proofreading process can be reduced.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A delivery server apparatus comprising:
a detection portion configured to perform, for each page of image data representing one or more manuscript images, detection of a proof-correction indication image, the proof-correction indication image indicating that the page has proof-correction information; and
a generation portion configured to generate output information where link information, the link information being for use in displaying a page where the proof-correction indication image is detected, is added to the image data.

2. A delivery method comprising:
performing, for each page of image data representing one or more manuscript images, detection of a proof-correction indication image, the proof-correction indication image indicating that the page has proof-correction information; and
generating output information where link information, the link information being for use in displaying a page where the proof-correction indication image is detected, is added to the image data.

3. A delivery server apparatus comprising:
a detection portion configured to detect a difference between first image data, the first image data being data representing one or more manuscript images, and second image data, the second image data being data representing the manuscript images and containing proof-correction information; and
a generation portion configured to generate output information where link information, the link information being for use in displaying a page where the difference is detected, is added to the second image data.

4. The delivery server apparatus according to claim 3, further comprising
an acquisition portion configured to acquire the first image data using storage location information indicating location where the first image data is stored, wherein
the detection portion detects a difference between the acquired first image data and the second image data.

5. The delivery server apparatus according to claim 3 or 4, wherein the output information generated by the generation portion explicitly indicates a region containing the detected difference, the region being one of regions into which a single page is divided as desired.

6. A delivery method comprising:
detecting a difference between first image data, the first image data being data representing one or more manuscript images, and second image data, the second image data being data representing the manuscript images and containing proof-correction information; and
generating output information where link information, the link information being for use in displaying a page where the difference is detected, is added to the second image data.

7. A delivery system including an image forming apparatus and a delivery server apparatus, the delivery system comprising:
a reading control portion configured to control scanning of a manuscript containing handwritten proof correction;
a detection portion configured to perform, for each page of image data representing one or more manuscript images obtained by scanning the manuscript, detection of a proof-correction indication image, the proof-correction indication image indicating that the page has proof-correction information;
a generation portion configured to generate output information where link information, the link information being for use in displaying a page where the proof-correction indication image is detected, is added to the image data; and
a delivery control portion configured to perform control of delivering the generated output information to an information processing apparatus.
